# EUROPEAN PATENT APPLICATION

(11) **EP 4 765 961 A1**
(43) Date of publication of application: **24.06.2026**
(21) Application number: 24221800.6
(22) Date of filing: 19.12.2024
(51) Int. Cl.: H04W 52/02, H04B 7/00, H04W 76/00, H04W 84/12, H04W 68/00, H04W 88/00

(54) **REVERSE TXOP POWER-SAVING**

(71) Applicant: Koninklijke Philips N.V., 5656 AE Eindhoven (NL)
(72) Inventor: DAVIES, Robert James, Eindhoven (NL); SMEARS, Nicholas, Eindhoven (NL)
(74) Representative: Philips Intellectual Property & Standards

(57) **Abstract**

There is provided methods and devices arranged for the controlling media access in a wireless network. The wireless network may comprise a first device and a second device. The first device may obtain a reservation to the wireless medium for a duration and then relinquish the reservation for a part of the duration and be arranged to go into a power-saving state. The first device may receive a power-saving allowed or disallowed indication from another device and enter or not a power-saving state.

## Description

### FIELD OF THE INVENTION

The present invention relates to wireless networks, in particular local networks such as those using the IEEE 802.11 standard.

### BACKGROUND OF THE INVENTION

Wireless networks are frequently very busy with many devices needing to transmit. The heavy occupation of the wireless medium can result in unacceptable delays or latency for some high importance transmissions. Devices in such networks may obtain access to the medium for certain periods in various ways, such as by sensing the medium and starting a transmission. This gives the device a period in which it is allowed to complete its transmission without other devices sending transmissions that collide with those of the device in question. In IEEE 802.11, the period of freedom to transmit, which is effectively a reservation of the medium, is sometimes referred to a Transmission Opportunity or TXOP. It may occur that while the device having the reservation (the TXOP holder in IEEE 802.11 terminology), does not need to use all of the reservation period and may also be a device using power-saving mechanisms.

In such a power-saving mechanism, a device may enter a power-saving state. Such states are sometime known as `doze' states. For the present disclosure, these terms are assumed to be synonymous.

### SUMMARY OF THE INVENTION

The inventors have realized that where a device attempts to use return part of a reservation (e.g. a TXOP) to another device and enter a power-saving or doze state, problems may arise. For instance, the device may be unavailable to receive urgent transmissions. Therefore, aspects, embodiments and variants of the invention are defined in the appended claims.

In an aspect, there is provided a method of controlling wireless medium access in a wireless network, the network comprising a first device and a second device. The first device may be arranged to enter a power-saving state when it has made a no-data-expected determination, the no-data-expected determination being that it expects to receive no more data, The method may comprise acquiring by the first device, a reservation for access to the wireless medium, the reservation having a first duration, sending, by the first device to the second device, a first message containing an indication that first device is relinquishing (or returning or donating) a first part of the reservation to the second device, receiving, by the first device from the second device, after the first message, a second message containing a power-save disallow indication, the power-save disallow indication instructing the first device to not enter a power-saving state. The method may comprise the first device remaining, in an awake state at least for a second part of the reservation, wherein the second part is contained within the first part.

In an aspect, there is provided a method of controlling wireless medium access in a wireless network, the network comprising a first device and a second device, the first device being arranged to enter a power-saving state when it has made a no-data-expected determination, the no-data-expected determination being that it expects to receive no more data, the first device having sent a request to enter a power-saving state to the second device. The method may comprise acquiring by the first device a reservation for access to the wireless medium, the reservation having a first duration, sending, by the first device to the second device, a first message containing an indication that first device is relinquishing the reservation to the second device, receiving, by the first device from the second device, after the first message, a second message containing a power-saving allowed indication, the power-saving allowed indication indicating that the first device is allowed to enter a power-saving state. The first device may enter a power-saving state based on receiving the power-saving allowed indication.

Thus the first device is arranged to remain awake when instructed not to enter power-saving or to remain awake until allowed to enter power-saving. Because the first device remains available the other (second) device is able to send further urgent data to the first device, even though it had previously indicated that it had (at the time) no further data. This caters for rapidly changing situations - which may be expected when attempt is made to handle urgent (or low-latency) data.

In an embodiment, the first device is arranged to start a No Data Timer after making the no-data-expected determination, and to remain awake at least until the expiry of the No Data Timer or the receipt of one of the power-saving disallow indication or the power-saving allow indication. This had the advantage of limiting how long the first device must remain awake - otherwise it is entirely dependent on instructions from the other device, which may, for various reasons, delay in successfully getting those instructions to the first device.

In an aspect, the first device remains in an awake state at least for a second part of the reservation. The decision to remain in the awake state (and the duration) is based on a characteristic of recent traffic to or from the first device, wherein the first part is contained within the first part. Thus the first device makes the decisions unilaterally, freeing it from dependency on another device whilst still allowing some opportunity to the other device to transmit to it.

In aspects, there are device arranged to act as the first device herein disclosed, as defined in the appended claims.

In an aspect there is provided, a computer program product, storable on a computer-readable medium and arranged, when run a computer to execute the method disclosed herein.

### BRIEF DESCRIPTION OF THE DRAWINGS

Examples of several of the various embodiments of the present disclosure are described herein with reference to the drawings wherein:
Fig. 1 represents a wireless network.
Fig. 2 represents a frame (i.e. message) exchange in the wireless network of Fig. 1.
Fig. 3 represents various problems that can occur with the frame exchange of Fig. 2.
Fig. 4 represents a frame exchange according to an embodiment.
Fig. 5 represents a frame exchange according to an embodiment.
Fig. 6 represents a frame exchange according to an embodiment.
Fig. 7 represents a frame exchange according to an embodiment.

### DETAILED DESCRIPTION

In the appended figures, same references designate same elements.

In the present disclosure, various embodiments are presented as examples of how the disclosed techniques may be implemented and/or how the disclosed techniques may be practiced in environments and scenarios. It will be apparent to persons skilled in the relevant art that various changes in form and detail can be made therein without departing from the scope. After reading the description, it will be apparent to one skilled in the relevant art how to implement alternative embodiments. The present embodiments may not be limited by any of the described exemplary embodiments. The embodiments of the present disclosure will be described with reference to the accompanying drawings. Limitations, features, and/or elements from the disclosed example embodiments may be combined to create further embodiments within the scope of the disclosure. Any figures which highlight the functionality and advantages, are presented for example purposes only. The disclosed architecture is sufficiently flexible and configurable, such that it may be utilized in ways other than that shown. For example, the actions listed in any flowchart may be re-ordered or only optionally used in some embodiments.

Embodiments may be configured to operate as needed. The disclosed mechanism may be performed when certain criteria are met, for example, in a station, an access point, a radio environment, a network, a combination of the above, and/or the like. Example criteria may be based, at least in part, on for example, wireless device or network node configurations, traffic load, initial system set up, packet sizes, traffic characteristics, a combination of the above, and/or the like. When the one or more criteria are met, various example embodiments may be applied. Therefore, it may be possible to implement example embodiments that selectively implement disclosed protocols.

In this disclosure, "a" and "an" and similar phrases are to be interpreted as "at least one" and "one or more." Similarly, any term that ends with the suffix "(s)" is to be interpreted as "at least one" and "one or more." In this disclosure, the term "may" is to be interpreted as "may, for example." In other words, the term "may" is indicative that the phrase following the term "may" is an example of one of a multitude of suitable possibilities that may, or may not, be employed by one or more of the various embodiments. The terms "comprises" and "consists of", as used herein, enumerate one or more components of the element being described. The term "comprises" is interchangeable with "includes" and does not exclude unenumerated components from being included in the element being described. By contrast, "consists of" provides a complete enumeration of the one or more components of the element being described. The term "based on", as used herein, may be interpreted as "based at least in part on" rather than, for example, "based solely on". The term "and/or" as used herein represents any possible combination of enumerated elements. For example, "A, B, and/or C" may represent A; B; C; A and B; A and C; B and C; or A, B, and C.

If A and B are sets and every element of A is an element of B, A is called a subset of B. In this specification, only non-empty sets and subsets are considered. For example, possible subsets ofB = {STA1, STA2} are: {STA1}, {STA2}, and {STA1, STA2}. The phrase "based on" (or equally "based at least on") is indicative that the phrase following the term "based on" is an example of one of a multitude of suitable possibilities that may, or may not, be employed to one or more of the various embodiments. The phrase "in response to" (or equally "in response at least to") is indicative that the phrase following the phrase "in response to" is an example of one of a multitude of suitable possibilities that may, or may not, be employed to one or more of the various embodiments. The phrase "depending on" (or equally "depending at least to") is indicative that the phrase following the phrase "depending on" is an example of one of a multitude of suitable possibilities that may, or may not, be employed to one or more of the various embodiments. The phrase "employing/using" (or equally "employing/using at least") is indicative that the phrase following the phrase "employing/using" is an example of one of a multitude of suitable possibilities that may, or may not, be employed to one or more of the various embodiments.

The term configured may relate to the capacity of a device whether the device is in an operational or non-operational state. Configured may refer to specific settings in a device that effect the operational characteristics of the device whether the device is in an operational or non-operational state. In other words, the hardware, software, firmware, registers, memory values, and/or the like may be "configured" within a device, whether the device is in an operational or non-operational state, to provide the device with specific characteristics. Terms such as "a control message to cause in a device" may mean that a control message has parameters that may be used to configure specific characteristics or may be used to implement certain actions in the device, whether the device is in an operational or non-operational state.

In this disclosure, parameters (or equally called, fields, or Information elements: IEs) may comprise one or more information objects, and an information object may comprise one or more other objects. For example, if parameter (IE) N comprises parameter (IE) M, and parameter (IE) M comprises parameter (IE) K, and parameter (IE) K comprises parameter (information element) J. Then, for example, N comprises K, and N comprises J. In an example embodiment, when one or more messages/frames comprise a plurality of parameters, it implies that a parameter in the plurality of parameters is in at least one of the one or more messages/frames but does not have to be in each of the one or more messages/frames.

Many features presented are described as being optional through the use of "may" or the use of parentheses. For the sake of brevity and legibility, the present disclosure does not explicitly recite each and every permutation that may be obtained by choosing from the set of optional features. The present disclosure is to be interpreted as explicitly disclosing all such permutations. For example, a system described as having three optional features may be embodied in seven ways, namely with just one of the three possible features, with any two of the three possible features or with three of the three possible features.

Many of the elements described in the disclosed embodiments may be implemented as modules. A module is defined here as an element that performs a defined function and has a defined interface to other elements. The modules described in this disclosure may be implemented in hardware, software in combination with hardware, firmware, wetware (e.g., hardware with a biological element) or a combination thereof, which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. It may be possible to implement modules using physical hardware that incorporates discrete or programmable analog, digital and/or quantum hardware. Examples of programmable hardware comprise computers, microcontrollers, microprocessors, application-specific integrated circuits (ASICs); field programmable gate arrays (FPGAs); and complex programmable logic devices (CPLDs). Computers, microcontrollers, and microprocessors are programmed using languages such as assembly, C, C++ or the like. FPGAs, ASICs and CPLDs are often programmed using hardware description languages (HDL) such as VHSIC hardware description language (VHDL) or Verilog that configure connections between internal hardware modules with lesser functionality on a programmable device. The mentioned technologies are often used in combination to achieve the result of a functional module.

It is desirable for wireless networks to handle low latency traffic. IEEE 802.11bn, currently under development, has such a goal. Such traffic can be characterized by the presence of PPDUs that need to be delivered urgently within a short delay bound and which therefore may need to pre-empt or take priority over traffic with longer or no latency bounds. The present disclosure is described in the context, and uses terminology from, the IEEE 802.11 standard. Those skilled in the art will be able to apply the teaching to other types of wireless network.

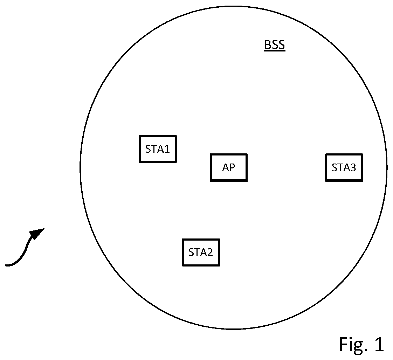

Fig. 1 represents a wireless network 1 where an AP (AP), and first, second and third STAs (STA1, STA2, STA3) is communicating. In IEEE 802.11, this is known as a Basic Service Set (BSS). Analogous entities exist in other types of wireless network.

In a way of obtaining a reservation for a time period (e.g. a TXOP) in wireless networks, a first device, or STA, (STA1) might issue a Ready-To-Send (RTS) message to indicate to a second device (STA2) the availability and quantity of low latency data. On reception, STA2 responds with a Clear-To-Send (CTS) message indicating that it is ready to receive the low latency data and STA1 may then transmit the low latency PPDU in the agreed time frame. By reservation, it may be understood that other devices/stations will refrain from attempting to transmit during the reservation period. It should be noted that, whilst the present disclosure uses the example of TXOPs acquired via an RTS/CTS frame exchange, other methods of obtaining a TXOP or reservation period exist and that the actual means of obtaining the TXOP is not important.

In IEEE 802.11, RTS (Ready-To-Send) ([1], 9.3.1.2) and CTS (Clear-To-Send) ([1], 9.3.1.3) frames may be exchanged by STAs as part of a virtual CS (Carrier Sense) mechanism. Each frame comprises a Duration field that indicates the period of time that the medium should be reserved for the transmission of the Data frame and the returning Ack frame. Each frame further comprises a Receiver Address (RA) field, being the MAC address of the intended destination STA and, in the case of the RTS but not the CTS, a Transmitter (i.e. sender) Address (TA) field, being the MAC address of the transmitting STA. The other STAs, upon hearing the RTS use the Duration field to set their NAVs to a value based on the Duration field, STAs that received the RTS do not adjust their NAVs upon receipt of the RTS whereas those that did not receive the RTS update their NAVs according to the data in the CTS (which contains the same duration as was in the RTS frame).

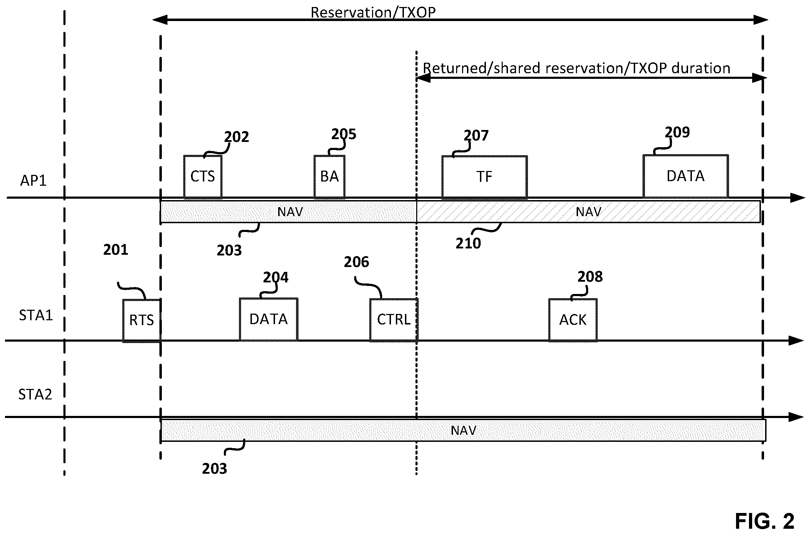

Fig. 2 represents a situation where STA1 has sent an RTS frame 201 to the AP and established a reservation or TXOP, the length of the reservation/TXOP being determined by the duration field in the RTS frame 201. The AP has responded with a CTS frame 202. In IEE 802.11, both the AP and STA2 update their NAVs to this reservation length - as shown by the bars 203 under the lines for the AP and STA2. Frame exchange 204 - 205 occurs between STA1 and the AP. It is desirable that any reservation time that will not be used is not wasted. Therefore, it is possible for STA1 to signal that it is `returning the unused part of the reservation/TXOP' to the AP by sending a control frame 206. This might also be expressed by stating that STA1 is relinquishing part of the TXOP - in this case to the AP. This allows the AP to cancel the reservation (as far as it is concerned) by resetting its NAV, effectively deducting the hatched part of the NAV bar 210 for the AP. The AP is then able to initiate frame exchange 207 - 208 with STA1. STA2, however maintains its NAV at the original value and so refrains from trying to transmit.

STAs may also use power-saving mechanisms and enter a power-saving or `doze' state. In the power-saving (doze) state, the STA powers down some of its circuitry and so has reduced capabilities (particularly in reception) as compared to its awake state. For example, a STA may power-down all but one of its multiple receive chains, making it unable to receive Multi-Input-Multi-Output (MIMO) transmissions. Of particular importance, it will be unable to receive multi-user (MU) PDDUs. If it powers all of its transceiver down, it will be unable to receive anything. It may be the case that the STA will base the moment it enters the power-saving state on whether it has determined that it is still expecting more data or not. It may base this determination on, what is called in IEEE 802.11 a `More Data' indication contained in a preceding transmission from the other device with which it is communicating. When this More Data indication has a value of 0 (in IEEE 802.11, the receiving device understands that there is no more data for it pending at the other device i.e. it is to expect no more traffic for the time being.

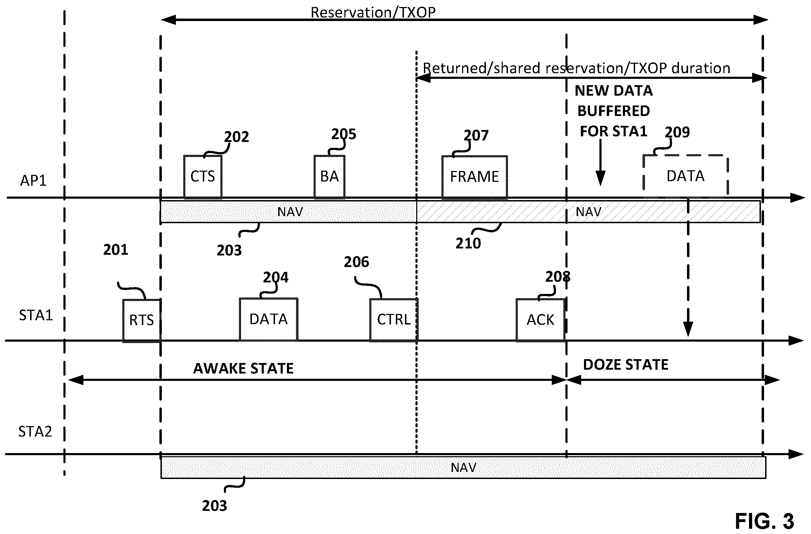

Fig. 3 represents a situation that may arise when STA1 uses a power-save mechanism just after returning a reservation/TXOP to the AP. The data frame 207 from the AP carries a More Data indication equal to zero (indicating that there is no more data to follow). Consequently, STA1 concludes that it is not expecting another transmission and, after sending the ACK frame 208 to the AP, STA1 enters a power-saving state. However, within a short space of time, the AP receives data in its buffer and tries to send DL frame 209 to STA1, which fails to be received because STA1 is already sleeping - the failure is denoted by the dashed box for frame 209. Whilst the AP could use the returned TXOP duration for communication with another station, it nevertheless has not been able to deliver some of its data to STA1.

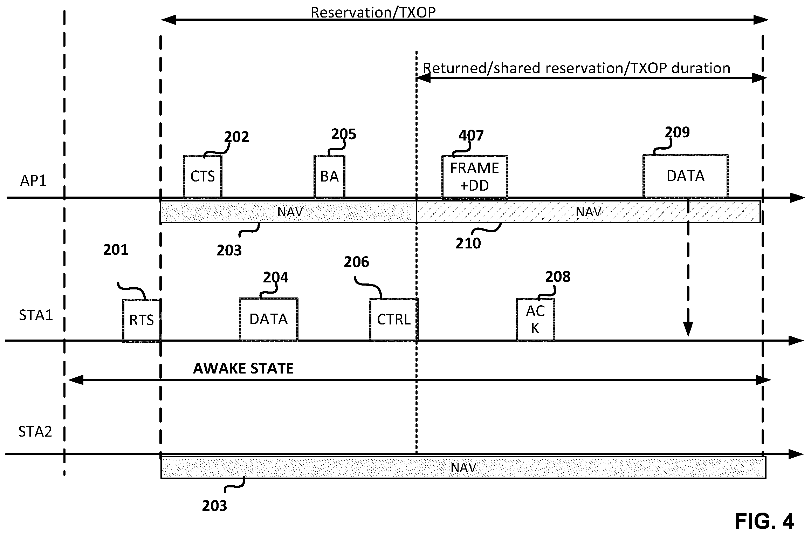

Fig. 4 represents an exemplary use of an embodiment. Frame exchanges 201 - 206 occur as described in relation to Fig. 3. STA1 has sent an indication to the AP at some point that it is using a power-save operation so the AP is aware that STA1 is intending to go into a power-saving (power-saving) state. In frame 407, the AP includes a `Disallow Power-saving' (DD) indication. This causes STA1 to abandon its transition to the power-saving state and so remain awake to receive the DL frame 209. The AP may decide to include the DD indication in frame 407 on the basis of a characteristic of the data it has recently transmitted or is currently transmitting to STA1. The characteristic may be something like the priority, TID or Access Category. The MAC layer of the AP may also have received an indication from another source such as a higher layer that it should not allow STA1 to transition into power-saving. Even though frame 407 may still contain a More Data = 0 indication, because of the DD indication, STA1 remains awake.

In a variant, the AP starts a No-Data-Timer upon transmission of the frame containing the More Data = 0 indication. If the No-Data-Timer expires before more data arrives, then the DD indication is not sent. The No-Data-Timer may have a fixed value or the AP may select the value based on a characteristic of recent traffic to and/or from STA1. The characteristic may be something like the priority, TID or Access Category.

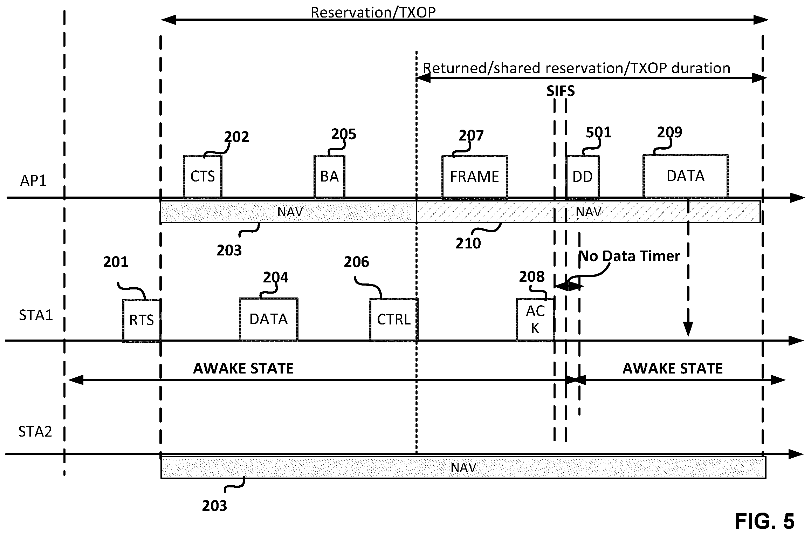

Fig. 5 represents an exemplary use of an embodiment. Frame exchanges 201 - 206 occur as described in relation to Fig. 3. STA1 has sent an indication to the AP at some point that it is using a power-save operation so the AP is aware that STA1 is intending to go into a power-saving state. The AP sends a frame 207 with a More Data = 0 as with the situation in Fig. 3. Upon the receipt of frame 207 or upon having sent the ACK 208, STA1 may start a `No Data' timer. If nothing else happens to STA1, when the No Data Timer expires, STA1 may enter a power-saving state. A short time after the ACK frame 208 (e.g. a SIFS), the AP sends a frame 501 containing a DD indication. Because STA1 is arranged to remain awake awaiting the expiry of the No Data Timer (i.e. a remain-awake duration), after sending its last frame (the ACK 208), it is still available to receive frames. In a variant on this embodiment, STA1 may be arranged to abandon a transition to the power-saving state upon reception, within the remain-awake duration, of any frame addressed to it. The value to which the No Data Timer is set may be a fixed value or may be based on a characteristic of recent or the last traffic the STA has received. The characteristic may be something such as the priority, TID or Access Category of the data. For example, the higher the priority of the traffic, the longer the STA remains awake. If the traffic was low priority, the STA may set the remain-awake duration to equal an interframe space - it may be convenient to choose an interframe space longer than the SIFS because the AP may be able to send a frame 501 just after a SIFS after the ACK frame 208. In a variant, the STA1 may calculate the remain-awake duration on the basis of the characteristic of the recent/last traffic. In a variant, the AP may send, at some point, a value for the STA to use as a remain-awake duration - for example as an indication contained in frame 207.

In a variant, STA1 transitions to the power-saving state upon the remain-awake duration expiring and nothing having occurrent to the STA1.

In a variant, the DD indication may be included in an earlier frame from the AP.

In a related variant, STA1 may abandon its attempt to transition into a power-saving state if the recent/last traffic had a priority above a threshold.

Alternatively, the AP may send the DD indication frame 501 in a format which even a dozing STA is able to receive - for example, a single-antenna chain mode. An advantage to using such a `power-saving-state-receivable' format is that the remain-awake duration could be reduced or dispensed with. Where the DD frame 501 is in a `power-saving-state receivable' format, STA1 may be arranged to re-awake should it have transitioned to a power-saving state.

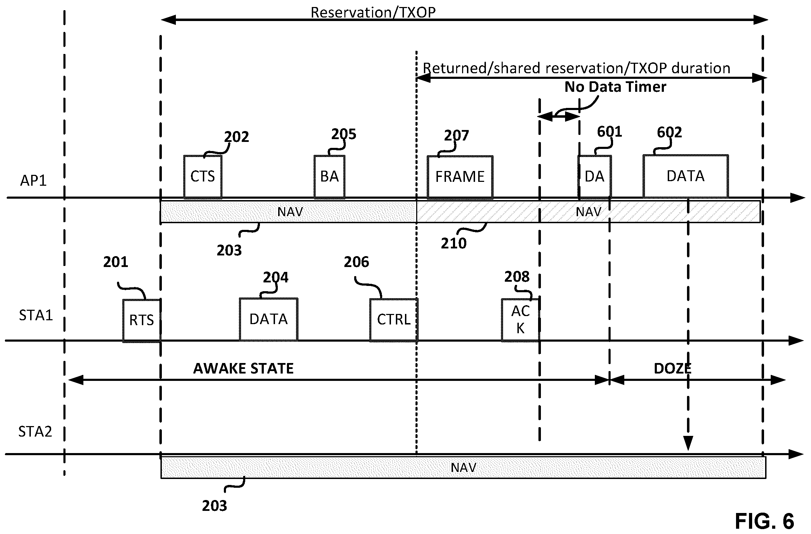

Fig. 6 represents an exemplary use of an embodiment. Frame exchanges 201 - 206 occur as described in relation to Fig. 3 - 5. STA 1 has sent an indication to the AP at some point that it is using a power-save operation so the AP is aware that STA1 requests to go into a power-saving state. Frame 207 from the AP may still contain a More Date = 0 indication. STA1 replies with an ACK 208. The AP starts a timer while STA1 remains awake, awaiting permission to enter the power-saving state. If the timer (the No Data Timer) expires with no data for STA1 having arrived in the AP's buffer, the AP sends a 'Power-saving Allowed' (DA) frame 601. STA1 enters a power-saving state at the end of the DA frame 601 (or sometime after) and the AP and other STAs may use the time for something else - such as, by way of example, a DL frame 602 from the AP to STA2.

Similarly to the embodiment of Fig. 5, the No-Data Timer may have a fixed value or may have its value based on a characteristic of recent or the last traffic exchanged with STA1. The characteristic may be the priority, TID or Access Category. For higher the priority/urgency traffic, the timer may be set with a longer expiry time whereas lower priority/urgency traffic may cause the timer to have a shorter expiry time.

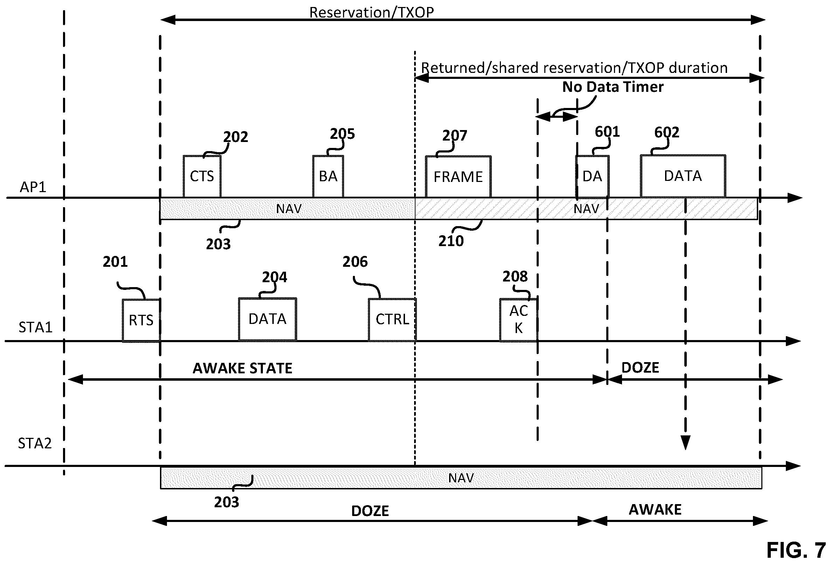

Fig. 7 represents a variant or extension of the embodiment of Fig. 6. STA2 has detected the RTS 201 of STA1 and the CTS 202 of the AP. It enters a power-saving state. The DA frame 601 may be sent addressed to STA1 (RA = STA1) and with a format that dozing STAs can detect and decode, for example needing only a single RX chain. Because the RA = STA1, STA2 may deduce the power-saving-allowed instruction does not apply to it and STA2 may be arranged to interpret this as an instruction to wake up, much as it might do with some other frames. The advantage of using the DA frame in this way is that a further wake-up frame for STA2 is not needed.

In a variant on the above embodiment, STA2 enters a power-saving state for a duration equal to that in the RTS frame and automatically wakes at the end of what would be the TXOP for STA1. In a further variant, the RTS frame is modified by the addition of an extra subfield which contains a power-saving duration. This could be used by STAs not concerned by the TXOP to enter a power-saving state and then wake without need for the overhead of a specific waking protocol.

In a further variant, the power-saving duration i.e. the time the STA remains in a power-saving state from receiving the frame indicating a TXOP for another STA and the time it wakes up automatically may be negotiated/set at some earlier time by other messages. These other messages may include an OPS frame or FILS Discovery frame, in the case of IEEE 802.11.

In an embodiment, the AP and STA1 have performed a negotiation to choose which 'polarity' of the protocol is to be used i.e. whether the AP will issue DD or DA indications. The advantage of this is that STA1 knows whether or not to set a No-Data-Timer - if STA1 were to set a No-Data-Timer and then go into a power-saving state when the AP was expecting STA1 to remain awake until it had sent a DA indication, this might be less convenient.

In an embodiment, the DD and DA indications are single-bit flags. On possibility for these may be to use one of the reserved bits in the various header portions of difference frame types.

## Claims

1. A method of controlling wireless medium access in a wireless network, the network comprising a first device and a second device, the first device being arranged to enter a power-saving state when it has made a no-data-expected determination, the no-data-expected determination being that it expects to receive no more data, the method comprising:
- acquiring by the first device a reservation for access to the wireless medium, the reservation having a first duration;
- sending, by the first device to the second device, a first message containing an indication that first device is relinquishing a first part of the reservation to the second device;
- receiving, by the first device from the second device, after the first message, a second message containing a power-save disallow indication, the power-save disallow indication instructing the first device to not enter a power-saving state,
wherein the first device remains in an awake state at least for a second part of the reservation, wherein the second part is contained within the first part.

2. The method of any preceding claim wherein power-save disallow indication is carried in a data frame.

3. The method of any preceding claim wherein the power-save disallow indication is carried in a control or management frame.

4. A method of controlling wireless medium access in a wireless network, the network comprising a first device and a second device, the first device being arranged to enter a power-saving state when it has made a no-data-expected determination, the no-data-expected determination being that it expects to receive no more data, the first device having sent a request to enter a power-saving state to the second device, the method comprising:
- acquiring by the first device a reservation for access to the wireless medium, the reservation having a first duration;
- sending, by the first device to the second device, a first message containing an indication that first device is relinquishing the reservation to the second device;
- receiving, by the first device from the second device, after the first message, a second message containing a power-saving allowed indication, the power-saving allowed indication indicating that the first device is allowed to enter a power-saving state;
wherein the first device enters a power-saving state based on receiving the power-saving allowed indication.

5. The method of any preceding claim wherein power-save allow indication is carried in a data frame.

6. The method of any preceding claim wherein the power-save allow indication is carried in a control/management frame.

7. The method of any preceding claim wherein the first device is arranged to start a No Data Timer after making the no-data-expected determination, and to remain awake at least until the expiry of the No Data Timer or the receipt of one of the power-saving disallow indication or the power-saving allow indication.

8. The method of claim 7 wherein the value of the No Data Timer is either a fixed value or is based on a characteristic of recent traffic to or from the first device.

9. The method of claim 7 or 8 wherein the value of the No Data Timer is provided by second device to the first device.

10. A method of controlling wireless medium access in a wireless network, the network comprising a first device and a second device, the first device being arranged to enter a power-saving state when it has made a no-data-expected determination, the no-data-expected determination being that it expects to receive no more data, the method comprising:
- acquiring by the first device a reservation for access to the wireless medium, the reservation having a first duration;
- sending, by the first device to the second device, a first message containing an indication that first device is relinquishing a first part of the reservation duration to the second device,
wherein the first device remains in an awake state at least for a second part of the reservation, wherein the remaining in the awake state is based on a characteristic of recent traffic to or from the first device, wherein the first part is contained within the first part.

11. A device (STA1), arranged to control wireless medium access in a wireless network, the network comprising a first device and a second device, the first device being arranged to enter a power-saving state when it has made a no-data-expected determination, the no-data-expected determination being that it expects to receive no more data, the first device comprising a processor arranged to cause the first device to:
- acquire a reservation for access to the wireless medium, the reservation having a reservation duration;
- send, to the second device, a first message containing an indication that first device is relinquishing a first part of the reservation duration to the second device;
- receive, from the second device, after the first message, a second message containing a power-save disallow indication, the power-save disallow indication instructing the first device to not enter a power-saving state
- remain in an awake state at least for a second part of the reservation duration, wherein the first part is contained within the first part.

12. A device (STA1), arranged to control wireless medium access in a wireless network, the network comprising a first device and a second device, the first device being arranged to enter a power-saving state when it has made a no-data-expected determination, the no-data-expected determination being that it expects to receive no more data, the first device comprising a processor arranged to cause the first device to:
- acquire a reservation for access to the wireless medium, the reservation having a reservation duration;
- send, to the second device, a first message containing an indication that first device is relinquishing a first part of the reservation duration to the second device;
- receive, from the second device, after the first message, a second message containing a power-save allow indication, the power-save allow indication, the power-save allow indication indicating that the first device is allowed enter a power-saving state;
- enter a power-save state for a second part of the reservation duration based on the reception of the power-save allow indication, wherein the second part is contained within the first part.

13. A device (STA1), arranged to control wireless medium access in a wireless network, the network comprising a first device and a second device, the first device being arranged to enter a power-saving state when it has made a no-data-expected determination, the no-data-expected determination being that it expects to receive no more data, the first device comprising a processor arranged to cause the first device to:
- acquire a reservation for access to the wireless medium, the reservation having a reservation duration;
- send, to the second device, a first message containing an indication that first device is relinquishing a first part of the reservation duration to the second device;
- remain in an awake state at least for a second part of the reservation duration based on a characteristic of recent traffic to and/or from the first device, wherein the second part is contained within the first part.

14. A computer program product, storable on a computer-readable medium and arranged, when run a computer to execute the method of any of claims 1 - 10.
